# EUROPEAN PATENT APPLICATION

(11) **EP 4 610 839 A1**
(43) Date of publication of application: **03.09.2025**
(21) Application number: 24160830.6
(22) Date of filing: 01.03.2024
(51) Int. Cl.: G06F 16/11, G06F 16/17, G06N 3/00

(54) **ARTIFICIAL NEURAL NETWORK SECURITY THROUGH INTEGRATION OF COMPONENT DATA**

(71) Applicant: Infineon Technologies AG, 85579 Neubiberg (DE)
(72) Inventor: RAJASEKHAR, Nikhita, 440010 Nagpur (IN); SEOW, Aun Chuah, 518147 Singapore (SG); YE, Ying, 572273 Singapore (SG)
(74) Representative: Viering, Jentschura & Partner mbB Patent- und Rechtsanwälte

(57) **Abstract**

A device (600) includes a hardware security module (602); and a processor (604), different from the hardware security module (602); wherein the processor (604) is configured to receive from the hardware security module (602) feature engineering data and coefficient data for a reference artificial neural network; and reconstruct the reference artificial neural network based on the feature engineering data, the coefficient data, and a predefined algorithm.

## Description

### Technical Field

Various aspects of this disclosure generally relate to the protection of artificial neural networks (ANN) from tampering through disintegration of the ANN into component data parts, which may be stored on a hardware security module (HSM), and subsequent reintegration of the ANN using the component data parts. Additional techniques for verifying the integrity of an ANN model are also disclosed herein.

### Background

A trained ANN may be a particularly valuable asset or investment. As a result, ANNs are subject to attack, such as by theft or manipulation of their data (e.g. their feature engineering data, their weights, etc.). Owing to the relative simplicity of attacking distributed models (e.g. models that are not centrally maintained), the risk of attack may be particularly great where the ANN is not centrally stored, but rather maintained as part of an edge computer. Such attacks may result in any of unauthorized access to the ANN, tampering with the ANN, or data breaches. A compromise of the ANN may result in any of financial losses, reputational damage, diminished competitive advantage, or increased risk of physical harm (such as in safety-critical applications). Current software security mechanisms for protection of ANNs may be associated with significant performance overhead and do not otherwise protect against physical tampering.

### Brief Description of the Drawings

In the drawings, like reference characters generally refer to the same parts throughout the different views. The drawings are not necessarily to scale, emphasis instead generally being placed upon illustrating the exemplary principles of the disclosure. In the following description, various exemplary embodiments of the disclosure are described with reference to the following drawings, in which:
FIG. 1A depicts an ANN;
FIG. 1B depicts the ANN of FIG. 1A with an altered weight;
FIG. 2 depicts this serialization or disintegration of an ANN into feature engineering data and coefficient data;
FIG. 3A depicts an algorithm for serializing or disintegrating feature engineering data from an ANN;
FIG. 3B depicts an algorithm for serializing or disintegrating model coefficients from the ANN;
FIG. 4 depicts a de-serialization or reintegration of the feature engineering data and coefficient data into the ANN;
FIG. 5A depicts roles of a server, the HSM, and the processor, according to a first implementation;
FIG. 5B depicts roles of a server, the HSM, and the processor, according to a second implementation;
FIG. 6 depicts a first configuration including a device with the HSM and the processor;
FIG. 7 depicts a flowchart of operations between the HSM and the processor; and
FIG. 8 depicts a method.

### Description

The following detailed description refers to the accompanying drawings that show, by way of illustration, exemplary details and embodiments in which aspects of the present disclosure may be practiced.

The word "exemplary" is used herein to mean "serving as an example, instance, or illustration". Any embodiment or design described herein as "exemplary" is not necessarily to be construed as preferred or advantageous over other embodiments or designs.

Throughout the drawings, it should be noted that like reference numbers are used to depict the same or similar elements, features, and structures, unless otherwise noted.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

The phrases "group (of)", "set (of)", "collection (of)", "series (of)", "sequence (of)", "grouping (of)", etc., in the description and in the claims, if any, refer to a quantity equal to or greater than one, i.e., one or more. The terms "proper subset", "reduced subset", and "lesser subset" refer to a subset of a set that is not equal to the set, illustratively, referring to a subset of a set that contains less elements than the set.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art.

The terms "processor" or "controller" as, for example, used herein may be understood as any kind of technological entity that allows handling of data. The data may be handled according to one or more specific functions executed by the processor or controller. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

As used herein, "memory" is understood as a computer-readable medium (e.g., a non-transitory computer-readable medium) in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, 3D XPointTM, among others, or any combination thereof. Registers, shift registers, processor registers, data buffers, among others, are also embraced herein by the term memory. The term "software" refers to any type of executable instruction, including firmware.

The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

In the following, a device and method for protection of an ANN is described, in which the ANN is protected from attack by being disintegrated into two data sets, respectively representing feature engineering data and coefficient data. These two data sets may be stored within a hardware security module, so as to protect them from external tampering. As will be described herein, and upon verification, the ANN may be reconstructed by re-integrating the ANN data component parts (e.g. the feature engineering data and the coefficient data). In this manner, the ANN is protected while being stored in its component parts within the HSM, and the ANN is only in complete (e.g. integrated) form within the application processor or memory when being used. Because the HSM offers increased security as compared to a conventional application processor, additional security is achieved by storing the ANN data components within the HSM, as opposed to storing the ANN in the conventional application processor or in its memory. Moreover, as will be described in detail herein, the ANN is stored within the HSM in serialized or disintegrated form, which further protects the ANN from theft or tampering. Finally, a check (e.g. a hash-based check or a signature-based verification) is implemented to ensure that the de-serialized or re-integrated ANN (e.g. at the application processor or its memory) is unaltered or otherwise corresponds to a reference ANN that serves as a touchstone for the de-serialization process.

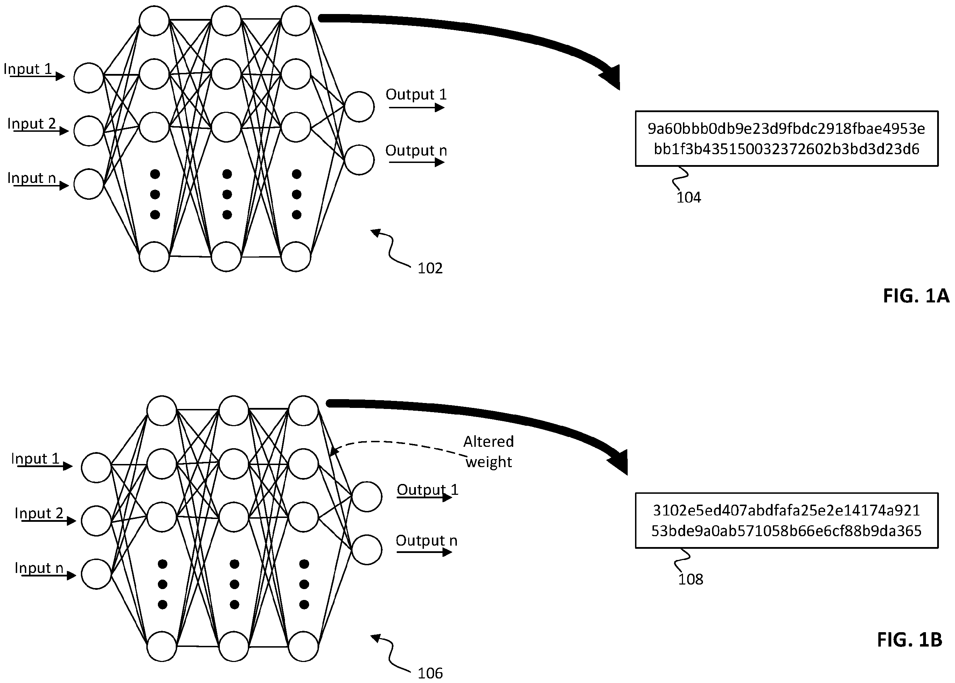

FIGs. 1A and 1B depict hash generation of similar, but not identical, ANNs. Specifically, FIG. 1A depicts an ANN 102. In a general sense, the ANN may be described as including feature engineering data and coefficient data, and the ANN may be stored as a data file. Were a hash function (e.g. such as SHA-256, for demonstrative purposes, although this is true of any hash function) to be applied to the stored data file, a unique hash identifier would result. In FIG. 1A, the ANN 102 is subjected to a hash function, which yields hash identifier 104. In this manner, the ANN itself, by being subjected to a hash function, is used to generate a hash identifier, which is a unique identifier of the ANN.

In FIG. 1B, the ANN 106 is identical to the ANN 102 in FIG. 1A, except that a single weight has been changed (see "altered weight"). If the same hash function as in FIG. 1A is applied to the modified ANN 106, the resulting hash identifier 108 will differ from the hash identifier in 104. As can be seen, even a modest change to the input data of the hash function can result in a significant difference within the hash identifier. In this manner, any changes in the feature engineering data or coefficient data of ANN 106 relative to the corresponding data in ANN 102 may be detected.

As stated above, the ANN may include or be essentially composed of feature engineering data and coefficient data. The feature engineering data may correspond to features or variables (such as the characteristics, properties, or attributes) present within data (e.g. within raw input data) to be analyzed by the ANN. The coefficient data may correspond to the weights associated with the outputs of each node of the ANN. Each of the feature engineering data and coefficient data are terms of art and will be appreciated and understood by the skilled person.

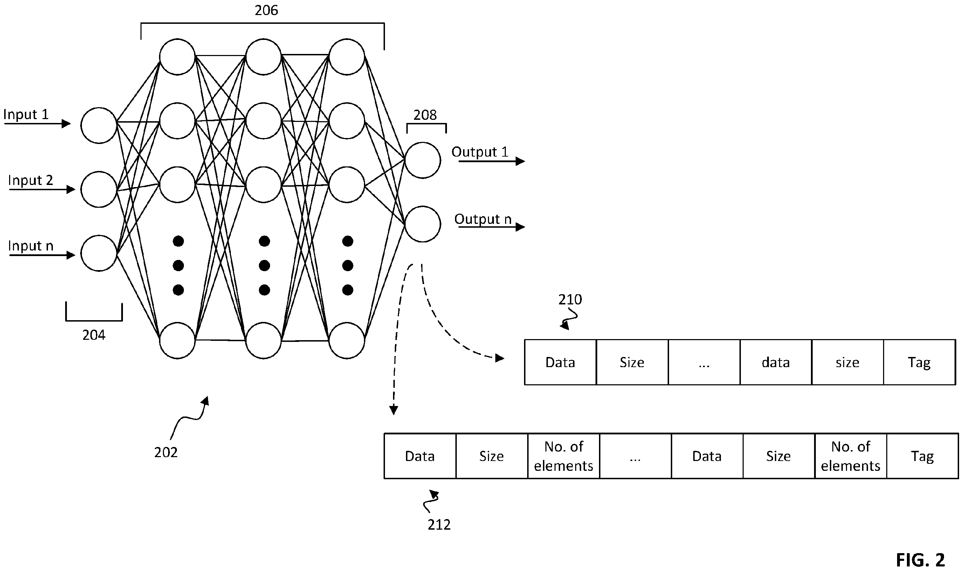

Any ANN may be serialized or disintegrated into feature engineering data and coefficient data. FIG. 2 depicts this serialization or disintegration of an ANN into feature engineering data and coefficient data. In this figure, an ANN is depicted as 202. The ANN includes 1-to-n input nodes within an input layer 204. The outputs of the input layer 204 are connected to the nodes of a first hidden layer of a plurality of hidden layers 206. The outputs of a final hidden layer of the plurality of hidden layers 206 are connected to the nodes of an output layer 208. In a generalized manner, the structure of the ANN 202 includes feature engineering data, which correspond to the various nodes and their connections, and coefficient data, which correspond to the weight given to the outputs of the nodes.

Using a predefined algorithm, the ANN 202 may be disintegrated or serialized into its component feature engineering data and coefficient data. This disintegration or serialization is depicted in FIG. 2, in which ANN 202 is disintegrated or serialized into feature engineering data 210 and coefficient data 212. The disintegration or serialization of the ANN 202 may be performed according to the predefined algorithm, which may prescribe, for example, the format of the data structure for the feature engineering data 210 and the coefficient data 212, and in particular, how to generate the feature engineering data and the coefficient data sets from the ANN. Conversely, the predefined algorithm may also prescribe how to generate the de-serialized or reintegrated ANN from the feature engineering data and coefficient data.

In one possible configuration, and for illustrative purposes only, the predefined algorithm may prescribe that the feature engineering data 210 and the coefficient data 212 are stored in a predetermined data format. Although a wide variety of predetermined data formats may be acceptable, the predetermined data format may include a tag to indicate whether the data correspond to feature engineering data 210 or the coefficient data 212. This tag may be implemented, for example, by using a particular bit as a tag identifier, such as by storing a bit as 0 to represent the feature engineering data 210 and storing the bit as 1 to represent the coefficient data 212, or vice versa.

In one exemplary configuration, the feature engineering data 210 may be stored as depicted in FIG. 2, in which the data are organized by a data block (first block in 210) that contains the feature engineering data itself, a size block (second block in 210) that identifies a length of the data block, and a tag (final block of 210) that identifies the data blocks as corresponding to feature engineering data 210. Similarly, the coefficient data 212 may be stored as depicted in FIG. 2 in a data block (first block of 212) that contains the coefficient engineering data itself, a size bock (second block in 212) that identifies a length of the data block, a block indicating a number of corresponding elements (third block in 212), and a tag (final block of 212) that identifies the data blocks as being coefficient data 212.

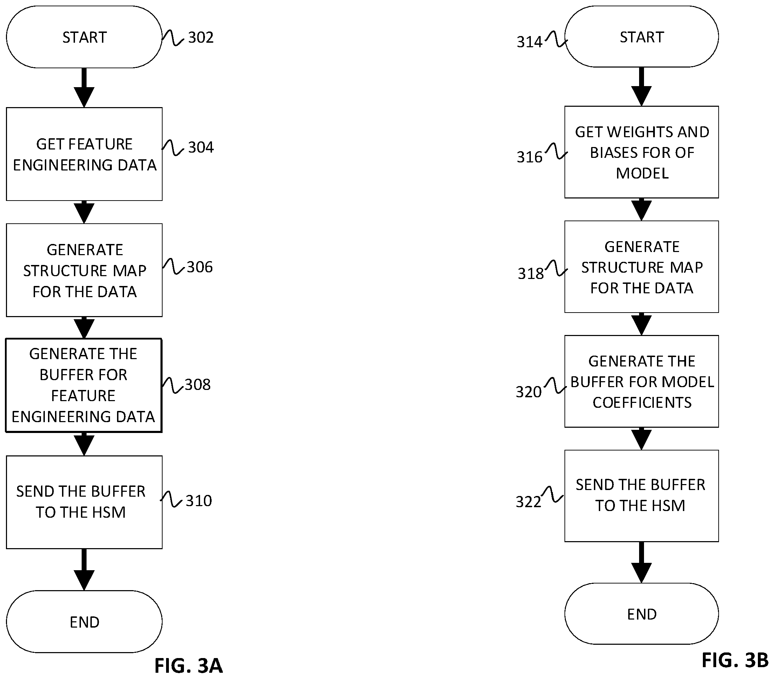

FIGs. 3A and 3B depict exemplary elements of a predefined algorithm for serializing or disintegrating the ANN into feature engineering data and coefficient data. In FIG. 3A, and upon starting 302 the algorithm, a processor (in this case, likely a server or a processor at the time of manufacturing and distinct from the application processor as disclosed herein) may be configured to get or obtain feature engineering data from the ANN 304, to generate a structure map for the obtained feature engineering data 306, to generate a buffer (a stored format) of the feature engineering data 308, and to send the buffer to a Hardware Security Module (HSM) 310. In FIG 3B, and upon starting the algorithm 314, the processor (likely the same processor that serialized or disintegrated the feature engineering data) may be configured to obtain weights and biases of the model 316, generate a structure map for the data 318, generate a buffer (a stored format) for the model coefficients 320, and send the buffer to the HSM 322. Various techniques for generating the structure map of the feature engineering data or the coefficient data are known, and any known technique may be utilized for this purpose. Similarly, various types of structure maps are known, and any such type may be utilized for this purpose. As stated above, once serialization or disintegration of the ANN is complete, these two corresponding data sets may be stored in the HSM. For completeness, such serialization or disintegration of the ANN will normally be performed as part of a manufacturing step, such that the serialized or disintegrated portions of the ANN are stored within the HSM at the time of manufacture or implementation. Alternatively or additionally, a new ANN (or a modified, existing ANN) may be serialized or disintegrated and caused to be stored on the HSM after implementation, such as by an owner or remotely.

The serialized or disintegrated ANN that is stored on the HSM cannot readily be used. To use the ANN, the ANN must be de-serialized or integrated. This may occur in response to a request from a processor (e.g. an application processor) for the HSM to provide the serialized or disintegrated feature engineering data and coefficient data for reintegration of the ANN by the processor according to a predefined algorithm. In one exemplary configuration, the predefined algorithm is stored in the application side such as in the application processor. This deserialization may be performed, for example, in response to a request or instruction to perform one or more determinations using the ANN. In this manner, a user wishing to implement an ANN may cause a request to be sent from the processor (e.g. the application processor) to the HSM, for the HSM to send the feature engineering data and coefficient data to the processor.

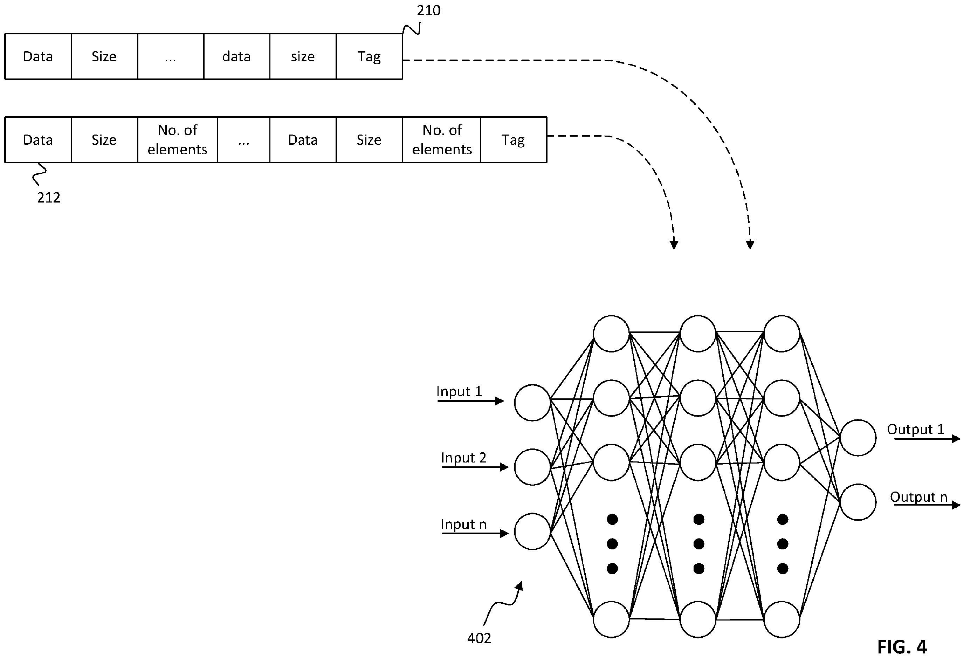

FIG. 4 depicts a de-serialization or integration of the feature engineering data 210 and coefficient data 212 into the ANN 402. In this manner, the algorithms depicted as FIGs. 3A and 3B may be performed generally in reverse, such that the data sets corresponding to the feature engineering data 210 and the coefficient data 212 are received by the processor (e.g. the application processor) from the HSM. Using these data sets, the structure map for the feature engineering data, and the structure map for the coefficient data, the processor may be configured to de-serialize or integrate these data sets into the ANN. In this manner, the processor may be configured to generate (de-serialized or integrate) the ANN from these data sets, such that the ANN may be utilized to perform the desired functionality.

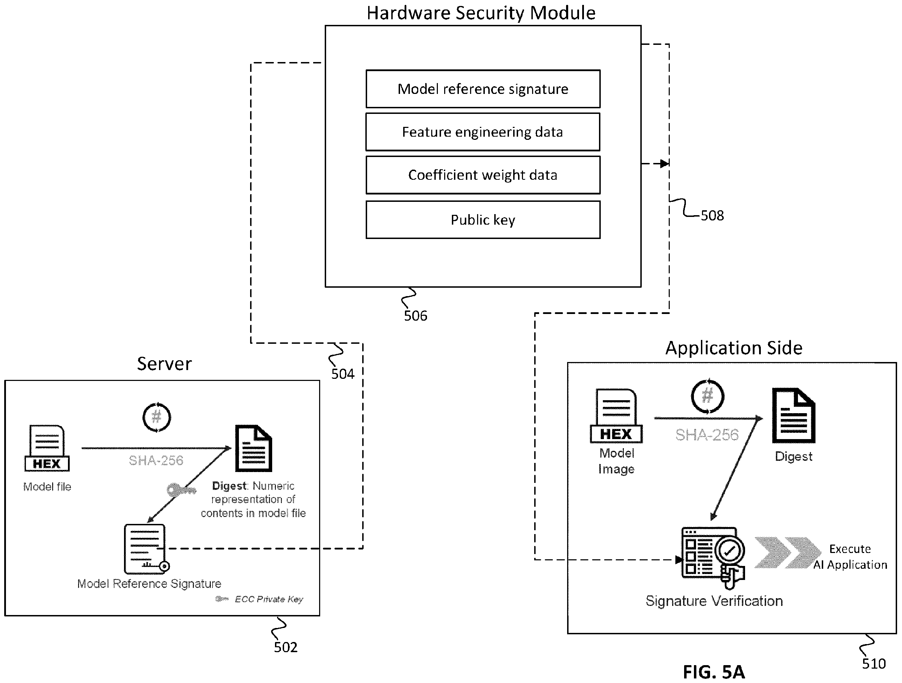

FIG. 5A depicts roles of a server 502 (e.g. a server of a manufacturer, a computing device of a manufacturer), the HSM 506, and the processor 510 (e.g. the application side processor). Turning to the server 502, the server includes a model file, which corresponds to the ANN. In this manner, the server 502 includes or has access to a complete version of the ANN in an integrated or de-serialized form. The server 502 generates a representation of the ANN (e.g. a numeric or alphanumeric representation of the ANN). This representation of the ANN may be or include a hash value of the ANN. The representation of the ANN may be generated using any known technique. In one exemplary configuration, the server 502 may generate the numeric representation using SHA-256. In Fig. 5A, the representation of the ANN is depicted as the digest.

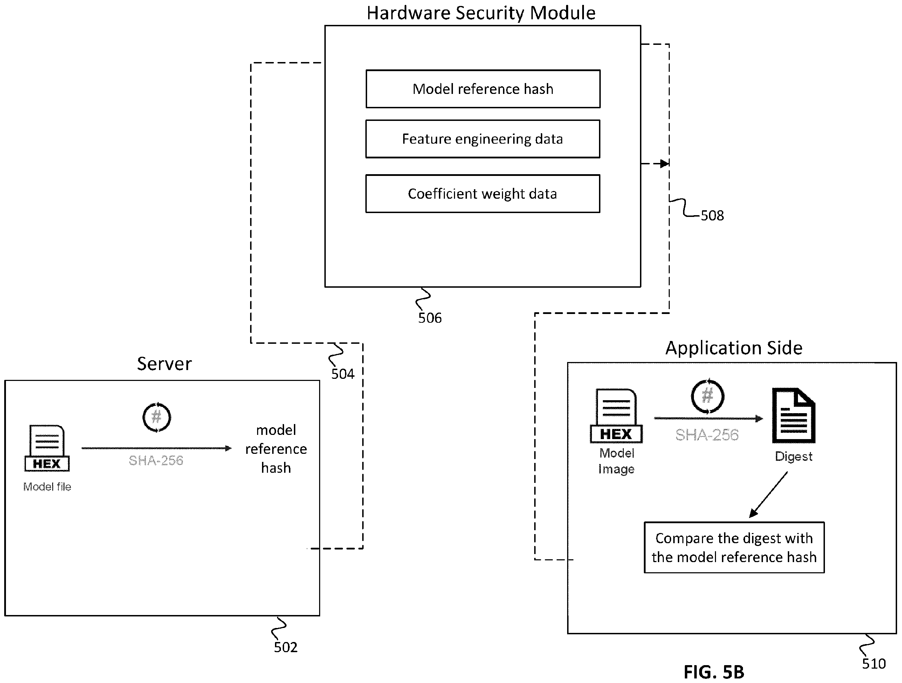

The server 502 may optionally sign the representation of the ANN, such as with a private key. In this manner, the server 502 may generate or originate both a public key and a private key and may use the private key to sign (represented by the key within box 502) the representation of the ANN (e.g. the hash of the reference ANN). The signed representation of the ANN may be the model reference signature. The corresponding public key may be stored in the HSM and may be subsequently used by the HSM for verification of the model reference signature. The server may send 504 the signed representation of the ANN to the HSM 506 or otherwise cause the signed representation of the ANN to be stored on the HSM 506. In an alternative configuration illustrated for example in FIG. 5B, the server 502 may send the representation of the ANN (e.g. the non-signed version of the representation) to the HSM or otherwise cause the non-signed version of the representation to be stored on the HSM.

The HSM 506 may be configured to store the signed representation of the ANN as the model reference signature. The model reference signature may be a signed version of a hash of a representation of an unadulterated or unchanged version of the ANN such that the reference signature serves as a gold standard for comparison to a de-serialized or reintegrated ANN at the application processor 510. The depiction of the HSM 506 (or furthermore the server 502 or application side processor 510) is not intended to be complete, and therefore the HSM 506 may further include any one or more additional modules, functions, or data sets, which may include, but are not limited to, a platform binding secret, an integrity certificate, a root certificate authority (CA) certificate, and/or a shared master secret key.

As described above, the processor 510 (e.g., the application processor) may send a request (the request is not depicted) to the HSM 506 for delivery of the feature engineering data and coefficient data of the ANN. The HSM 506 may send the feature engineering data and the coefficient data to the processor 510 for de-serialization or reintegration of the ANN according to the predefined algorithm.

Upon completing the de-serialization of the ANN, the processor (e.g., the application processor) 510 may generate a representation of the de-serialized ANN for comparison purposes. This representation may be a numeric and/or alphanumeric representation of the de-serialized ANN. The representation may be a hash of the de-serialized ANN. For purposes of clarity, this de-serialized ANN may be referred to herein as a candidate ANN.

The processor (e.g., the application processor) 510 may send 508 the representation of the candidate ANN to the HSM 506 for verification purposes. In this manner, the representation of the candidate ANN may be referred to as a second representation, whereas the signed representation of the ANN generated by the server 502 and stored on the HSM 506 may be referred to as a model reference signature.

The HSM 506 may be configured to compare the model reference signature (e.g. stored in the HSM) with the candidate ANN (e.g., the second representation). If the candidate ANN is identical to the original ANN from which the server's 502 first representation was calculated, then the first representation (e.g. the model reference signature as verified with the public key) and the second representation (e.g. the hash of the candidate ANN) will be identical. If the candidate ANN differs in any way from the original ANN from which the server's 502 first representation was calculated, then the first representation and the second representation will differ. In this manner, the HSM 506 may determine the accuracy of the candidate ANN may verify (send 508 a verification) or not verify (send 508 a non-verification or failure, or otherwise not send a verification) the candidate ANN accordingly.

In this process, it is noted that the first representation and/or the second representation may be transferred or stored in a signed form or unsigned form. That is, the HSM may store the first representation in a signed form, and the HSM may utilize a public key to un-encode/recover/verify the first representation for comparison to the second representation (comparison of the model reference signal to the representation of the candidate ANN). Should the second representation (e.g. the representation of the candidate ANN) be signed, the HSM 506 may utilize a public key to verify the second representation, for comparison of the second representation to the first representation.

As stated above, the HSM 506 may be configured to verify or not to verify the candidate ANN based on a comparison of the first representation and the second representation. That is, when the first representation and the second representation are identical (as will be described later herein, either unsigned versions of the first representation and the second representation may be directly compared, or the first representation and the second representation may be recovered from a signed version or the first representation and/or a signed version of the second representation, using a public key), the HSM 506 may be configured to send a signal to the processor 510, wherein the signal represents a verification of the candidate ANN. Conversely, when the first representation and the second representation (e.g. the forms of the first representation and the second representation that are either unsigned or are recovered from signed versions using a public key) are not identical, the HSM 506 may be configured to send a signal to the processor 510 wherein the signal represents a non-verification or rejection of the candidate ANN. Upon receiving the verification of the candidate ANN, the processor (e.g. the application processor) may perform one or more computations or analyses using the ANN. Upon receiving the non-verification or rejection, the processor (e.g. the application processor) may be configured not to perform any computations or analyses using the ANN, to delete the ANN, or to otherwise take action consistent with a potentially tampered-with or compromised ANN.

For clarity, the procedure according to FIG. 5A may be implemented in such a way that the comparison of the first representation and the second representation occurs in the HSM 506, or alternatively in such a way that the comparison of the first representation and the second representation occurs in the application processor 510. Should the comparison occur in the HSM 506, then the application processor 510 will sign (e.g. with a private key) the hash value of the deserialized, candidate ANN and send this signed version to the HSM 506 for comparison. Should the comparison occur in the application processor 510, then the HSM 506 will send the model reference signature to the application processor 510, where the model reference signature will be verified using a public key, and the result will be compared with the hash of the deserialized, candidate ANN. Either of these options may be selected as desired for a given implementation.

It is noted that the verification of a signed hash using a public key requires (1) the public key, (2) the model reference signature, and (3) the digest. Using these three elements, the corresponding algorithm can ensure that the digest has not been modified since the digest was signed.

FIG. 5B depicts an alternative configuration in which both the first representation of the ANN from the server (Model reference hash (e.g., a "golden" reference hash)) and the second representation of the ANN from the application side processor are unsigned. Should they both be unsigned, then the server 502 may generate from an integrated ANN (the model file) a model reference hash using a hashing algorithm. The server may then cause the model reference hash to be stored on the HSM 508. The application side processor 510 may integrate the component parts of a candidate ANN and generate a hash (depicted as the digest) from this integrated candidate ANN using a hashing function. The hash of the candidate ANN may be compared to the model reference hash either within the Application side as shown in Fig. 5B or in the HSM (not shown). That is, if the model reference hash and the hash of the candidate ANN are identical, then the candidate hash corresponds to the model reference hash as stored on the HSM 506 and therefore presumably to the model file on the server 502.

FIG. 5B depicts this alternative configuration in which the golden model (e.g. the truth model generated by the server and stored on the HSM) is not signed with a private key as in FIG. 5A, but is instead hashed (e.g. according to a hashing procedure) and stored in the HSM. This alternative as depicted in FIG. 5B, may be selected, such as for simplicity of implementation. That is, the complexities of signing the reference hash of the ANN and/or signing the hash of the candidate ANN using a private key and verifying these signed hashes using a public key may be optionally omitted. An advantage, however, of the implementation of FIG. 5A as opposed to that of FIG. 5B is that the additional step of signing the hash from the server 502 allows for the verification of the hash that is stored on the HSM 506. That is, using the procedure of FIG. 5A, it can be verified that the hash stored on the HSM 506 has not been altered and thus corresponds exactly to the hash from the server 502. This additional security may not be present when implementing the procedure as depicted in FIG. 5B.

Finally, the comparison of the reference hash or model reference signature with the hash of the candidate ANN may optionally take place either in the HSM 506 or in the application side processor 510. Should it be desired to perform this comparison in the HSM 508, then the application side processor 510 may be configured to send the hash (e.g. the signed hash or the unsigned hash) of the candidate ANN to the HSM 508. In the case of a signed hash, the HSM 506 may utilize a public key to verify the signed hash of the candidate ANN and/or a public key to verify the model reference signature, and the HSM 506 may be configured to compare these results. In the case of an unsigned hash, the application side processor 510 may send an unsigned hash of the candidate ANN to the HSM 508, and the HSM 508 may be configured to compare the model reference hash with the hash of the candidate ANN. Alternatively, and should it be desired for the application side processor to perform this comparison, then the HSM 508 may be configured to send the model reference signature or the model reference hash to the application side server 510, which may then compared these values with the hash of the candidate ANN.

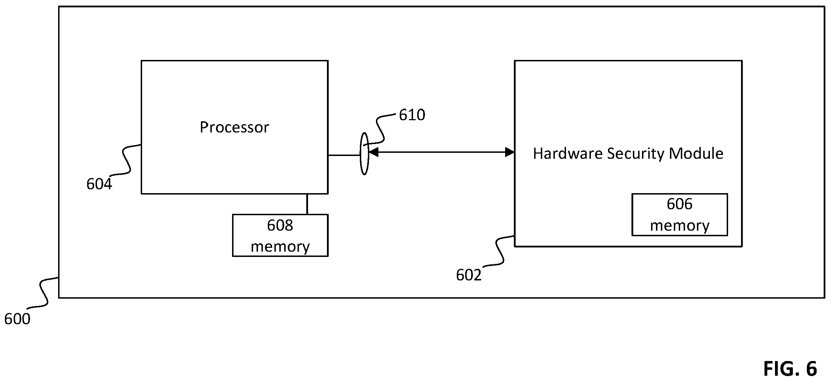

FIG. 6 depicts a first configuration including a device 600, including an HSM 602; and a processor 604, different from the HSM 602. The processor 604 may be configured to receive from the HSM 602 feature engineering data and coefficient data for a reference artificial neural network and to reconstruct the reference artificial neural network based on the feature engineering data, the coefficient data, and a predefined algorithm.

In a second configuration in combination with the elements of FIG. 6, the HSM 602 may include a first memory 606, which may be configured to store the coefficient data and the feature engineering data. In a third optional configuration, and in conjunction with any of the first or second configurations, the feature engineering data may represent a feature that has been extracted from raw data for inputting into the reference artificial neural network, wherein the feature corresponds to an input to a node of the reference artificial neural network. In a fourth optional configuration, and in combination with any of the first through the third configurations, the coefficient data may represent a weight for each connection between nodes of the reference artificial neural network. In a fifth optional configuration, and in combination with any of the first through the fourth configurations, the processor 604 may be further configured to reconstruct the reference artificial neural network by integrating the feature engineering data and the coefficient data according to the predefined algorithm. In a sixth optional configuration, and in combination with any of the first through the fifth configurations, instructions for the predefined algorithm may be stored on the second memory 608. In a seventh optional configuration, and in combination with any of the first through the fifth configurations, the HSM 602 may include a first memory 606, configured to store a hash value of the reference artificial neural network; wherein the processor 604 is configured to generate a representation of a candidate artificial neural network, wherein the candidate artificial neural network corresponds to the reconstructed reference artificial neural network; wherein the HSM 602 is configured to verify the candidate artificial neural network when the representation of the candidate artificial neural network corresponds to the hash value; and not to verify the candidate artificial neural network when the representation of the candidate artificial neural network does not correspond to the hash value. In an eighth optional configuration, and in combination with any of the first through the seventh configurations, the hash value may be a first hash value, and the representation of the candidate artificial neural network may include a second hash value of the candidate artificial neural network. In a ninth optional configuration, and in combination with any of the first through the eighth configurations, the hash value may be a first hash value; wherein the first hash value is a result of a hash function as applied to the reference artificial neural network; wherein generating the representation of the candidate artificial neural network includes the processor 604 generating the second hash value by applying the hash function to the candidate artificial neural network and optionally signing the resulting hash value according to a private key. In a tenth optional configuration, an in combination with any of the first through the ninth optional configurations, the first hash value may be verified using the signed hash value of the reference artificial neural network and a public key. The hash function may optionally be according to a Secure Hash Algorithm 2, a Secure Hash Algorithm 256, or any other algorithm capable of generating a hash. The resulting hash may optionally be signed using an Elliptic-Curve Cryptography algorithm, an RSA curve algorithm, or another other algorithm capable of signing a hash and recovering a hash using a private key and a public key, respectively.

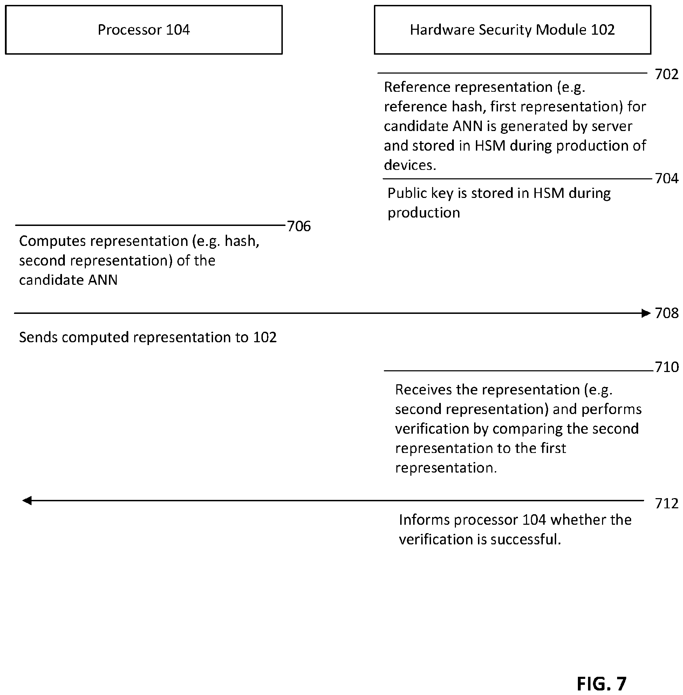

FIG. 7 depicts a flowchart of operations between the HSM 602 and the processor 604. According to this figure, the HSM 602 may be configured to receive and store 702 a reference representation (e.g. a reference hash, a first representation) for the candidate ANN that was generated by the server, such as during production of the relevant devices. The HSM 602 may be configured to receive and store 704 a public key. The processor 604 may be configured to compute 706 a representation (e.g. a hash, a second representation) of the candidate ANN. The processor 604 may be configured to send 708 the computed representation to the HSM 602. The HSM 602 may be configured to receive 710 the representation (e.g. the second representation) and to perform a verification by comparing the second representation to the first representation. The HSM 602 may be configured to inform 712 the processor 604 whether the verification was successful.

In this manner, the HSM 602 may receive information (e.g. in the form of a representation, a hash) about the de-serialized or reintegrated ANN within the processor 604, and the HSM 602 may be configured to compare this information to stored, trusted information about the ANN. Using this comparison, the HSM 602 may determine whether the de-serialized or reintegrated ANN is identical to the trusted ANN from which the server generated the first representation.

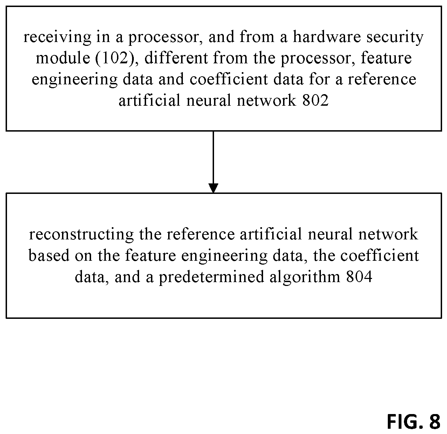

FIG. 8 depicts a method that includes receiving in a processor, and from an HSM 602, different from the processor, feature engineering data and coefficient data for a reference artificial neural network 802; and reconstructing the reference artificial neural network based on the feature engineering data, the coefficient data, and a predefined algorithm 804. The method may further include the HSM 602 including a first memory 606, configured to store the coefficient data and the feature engineering data. The method may further include reconstructing the reference artificial neural network by integrating the feature engineering data and the coefficient data according to the predefined algorithm. In this manner, the instructions for the predefined algorithm may be stored on the second memory 608. The method may further include storing a hash value of the reference artificial neural network in the HSM 602; generating in the processor a representation of the candidate artificial neural network of a candidate artificial neural network, wherein the candidate artificial neural network corresponds to the reconstructed reference artificial neural network; verifying in the HSM 602 the candidate artificial neural network when the representation of the candidate artificial neural network corresponds to the hash value; and not verifying the candidate artificial neural network when the representation of the candidate artificial neural network does not correspond to the hash value.

The HSM, as described throughout this disclosure, may refer to a physical computing device, which may be particularly designed to safeguard and/or manage secret information. The HSM may be configured to perform one or more signing or verification functions, such as by signing according to a private key or a shared private key, or by verifying according to a public key. In one configuration, the HSM may be a physical device that is separate from the processor (e.g. the application processor) as described herein. In this manner, the HSM may be a modular device that is connected to the processor (e.g. the application processor) to enable communication between the devices. In another configuration, the HSM may be configured on a common module or substrate with the processor (e.g. the application processor), such as on a common system on chip. In yet another configuration, the HSM may be configured as part of the processor (e.g. the application processor), such that the processor includes a secured area or region configured to perform the functions of the HSM. The HSM may include a memory, such as a secured memory, which may be configured to store the coefficient data and the feature engineering data and/or unsigned versions of the coefficient data and the feature engineering data.

As described herein, the processor may be an application processor, which may be a standard or conventional processor that is configured to reconstruct the reference artificial neural network by integrating the feature engineering data and the coefficient data according to the predefined algorithm. In this manner, the processor may have access to a memory on which the predefined algorithm is stored, and the processor may be configured to utilize the predefined algorithm to assemble (e.g. de-serialize or integrate) the ANN using the feature engineering data and the coefficient data. In some configurations, the processor may receive the feature engineering data and/or the coefficient data from the HSM in a signed form. In such configurations, the processor may be configured to decode the signed feature engineering data and/or coefficient data using a public key. The processor is described as being separate from the HSM in that the HSM will have its own processor and secured memory. The processor and the HSM can be in separate modules or separate chips, or separate devices on a common system on chip. In some configurations, the HSM can be a secure portion of a processor, wherein such a processor performs both the functions of the application processor as described herein and the HSM. In such configurations, there may be limited physical separation between the application processor and the HSM; however, these respective processor regions would be expected to perform the functions of the application processor and HSM as described herein.

The HSM may include a first memory, which may be configured to store a representation (e.g. a hash value) of the reference ANN. This stored representation of the reference ANN may be referred to as a first representation and may be considered a touchstone or gold standard of the ANN, such that it serves as a basis of comparison for the de-serialized or reintegrated ANN. In this manner, the processor may be configured to generate a second representation (e.g. a representation of the de-serialized or reintegrated ANN), which may be a hash value of the ANN, and to send this second representation to the HSM (in signed or unsigned/recovered form, depending on the implementation) for comparison to the hash value of the reference artificial neural network.

In some configurations, the processor (e.g. the application processor) may include a communications interface for communication between the HSM 602 and the processor 604. The communications interface may be any interface capable of communication, which may include a single wire interface or a multiple wire interface. The processor may be configured to send the representation of the candidate artificial neural network (second representation) to the HAS via the communications interface and to receive from the HAS via the communications interface 610 a response representing a confirmation that the representation of the candidate artificial neural network corresponds to the first hash value or a confirmation that the first representation of the candidate artificial neural network does not correspond to the first hash value.

Any of the steps described herein that are performed by the processor (the application processor) may be performed according to computer instructions configured to cause the processor to perform the steps described herein. The processor (e.g. the application processor) may have access to a non-transitory computer readable medium on which such instructions are stored, such that if the processor executes the stored instructions, the instructions are configured to cause the processor to perform any of the steps described herein.

Further aspects of the disclosure will be described by way of example:
In Example 1, a device 600, including a hardware security module 602; and a processor 604, different from the hardware security module 602; wherein the processor 604 is configured to: receive from the hardware security module 602 feature engineering data and coefficient data for a reference artificial neural network; and reconstruct the reference artificial neural network based on the feature engineering data, the coefficient data, and a predefined algorithm.
In Example 2, the device of Example 1: wherein the hardware security module 602 includes a first memory 606, configured to store the coefficient data and the feature engineering data.
In Example 3, the device of any one of Examples 1 or 2, wherein the feature engineering data represent a feature that has been extracted from raw data for inputting into the reference artificial neural network, wherein the feature corresponds to an input to a node of the reference artificial neural network.
In Example 4, the device of any one of Examples 1 to 3, wherein the coefficient data represent a weight for each connection between nodes of the reference artificial neural network.
In Example 5, the device of any one of Examples 1 to 4, wherein the processor is further configured to reconstruct the reference artificial neural network by integrating the feature engineering data and the coefficient data according to the predefined algorithm.
In Example 6, the device of any one of Examples 2 to 5, wherein instructions for the predefined algorithm are stored on the second memory 608.
In Example 7, the device of any one of Examples 1 to 6, wherein the hardware security module 602 includes a first memory 606, configured to store a hash value of the reference artificial neural network; wherein the processor 604 is configured to generate a representation of a candidate artificial neural network, wherein the candidate artificial neural network corresponds to the reconstructed reference artificial neural network; wherein the hardware security module 602 is configured to verify the candidate artificial neural network when the representation of the candidate artificial neural network corresponds to the hash value; and not to verify the candidate artificial neural network when the representation of the candidate artificial neural network does not correspond to the hash value.
In Example 8, the device of Example 7, wherein the hash value is a first hash value, and wherein the representation of the candidate artificial neural network includes a second hash value of the candidate artificial neural network.
In Example 9, the device of Example 8, wherein the hash value is a first hash value; wherein the first hash value is a result of a hash function as applied to the reference artificial neural network; wherein generating the representation of the candidate artificial neural network includes the processor 604 generating the second hash value by applying the hash function to the candidate artificial neural network and signing the second hash value according to a private encryption key.
In Example 10, the device of Example 9, wherein the first hash value is verified using the reference artificial neural network and a public key.
In Example 11, the device of Example 9, wherein the hash function is a hash function according to an Elliptic-Curve Cryptography algorithm, a Secure Hash Algorithm 2, a Secure Hash Algorithm 256, or an RSA curve algorithm.
In Example 12, the device of any one of Examples 10 or 11, further including: a communications interface 610 for communication between the hardware security module 602 and the processor 604; wherein the processor 604 is further configured to send the representation of the candidate artificial neural network to the hardware security module 602 via the communications interface 610 and to receive from the hardware security module 602 via the communications interface 610 a response representing a confirmation that the representation of the candidate artificial neural network corresponds to the first hash value or a confirmation that the first representation of the candidate artificial neural network does not correspond to the first hash value.
In Example 13, the device of any one of Examples 10 to 12, wherein the hardware security module 602 verifying the candidate artificial neural network when the representation of the candidate artificial neural network corresponds to the hash value includes the hardware security module 602 recovering the second hash by decrypting the representation of the candidate artificial neural network using a public key and verifying the candidate artificial neural network when the first hash is identical to the second hash; and not verifying the candidate artificial neural network when the first hash is not identical to the second hash.
In Example 14, the device of any one of Examples 9 to 13, wherein the hardware security module 602 is configured to only permit the processor 604 access to the feature engineering data and the coefficient data after the hardware security module 602 after the hardware security module (602) authenticates the processor or a user of the processor.
In Example 15, a method including: receiving in a processor, and from a hardware security module 602, different from the processor, feature engineering data and coefficient data for a reference artificial neural network; and reconstructing the reference artificial neural network based on the feature engineering data, the coefficient data, and a predefined algorithm.
In Example 16, the method of Example 15, wherein the hardware security module 602 includes a first memory 606, configured to store the coefficient data and the feature engineering data.
In Example 17, the method of any one of Examples 15 or 16, wherein the feature engineering data represent a feature that has been extracted from raw data for inputting into the reference artificial neural network, wherein the feature corresponds to an input to a node of the reference artificial neural network.
In Example 18, the method of any one of Examples 15 to 17, wherein the coefficient data represent a weight for each connection between nodes of the reference artificial neural network.
In Example 19, the method of any one of Examples 15 to 18, further including the processor reconstructing the reference artificial neural network by integrating the feature engineering data and the coefficient data according to the predefined algorithm.
In Example 20, the method of any one of Examples 16 to 19, wherein instructions for the predefined algorithm are stored on the second memory 608.
In Example 21, the method of any one of Examples 15 to 20, further including storing a hash value of the reference artificial neural network in the hardware security module 602; generating in the processor a representation of the candidate artificial neural network of a candidate artificial neural network, wherein the candidate artificial neural network corresponds to the reconstructed reference artificial neural network; verifying in the hardware security module 602 the candidate artificial neural network when the representation of the candidate artificial neural network corresponds to the hash value; and not verifying the candidate artificial neural network when the representation of the candidate artificial neural network does not correspond to the hash value.
In Example 22, the method of Example 21, wherein the hash value is a first hash value, and wherein the representation of the candidate artificial neural network includes a second hash value of the candidate artificial neural network.
In Example 23, the method of Example 22, wherein the hash value is a first hash value; wherein the first hash value is a result of a hash function as applied to the reference artificial neural network; wherein generating the representation of the candidate artificial neural network includes the processor 604 generating the second hash value by applying the hash function to the candidate artificial neural network and signing the second hash value according to a private key.
In Example 24, the method of Example 23, wherein the first representation is the first hash value signed with a private key.
In Example 25, the method of Example 24, wherein the hash function is a hash function according to a Secure Hash Algorithm 2 or a Secure Hash Algorithm 256 .
In Example 26, the method of any one of Examples 24 or 25, further including sending, from the processor 604, the representation of the candidate artificial neural network to the hardware security module 602 via the communications interface 610 and receiving from the hardware security module 602 via the communications interface 610 a response representing a confirmation that the representation of the candidate artificial neural network corresponds to the first hash value or a confirmation that the first representation of the candidate artificial neural network does not correspond to the first hash value.
In Example 27, the method of any one of Examples 24 to 26, wherein verifying the candidate artificial neural network when the representation of the candidate artificial neural network corresponds to the hash value includes the hardware security module 602 recovering the second hash by decrypting the representation of the candidate artificial neural network using a public key and verifying the candidate artificial neural network when the first hash is identical to the second hash; and not verifying the candidate artificial neural network when the first hash is not identical to the second hash.
In Example 28, the method of any one of Examples 23 to 27, further including the hardware security module 602 only permitting the processor 604 access to the feature engineering data and the coefficient data after the hardware security module (602) authenticates the processor or a user of the processor.
In Example 29, a non-transitory computer readable medium, including instructions which, if executed, cause one or more processors to perform the steps of any one of Examples 13 to 24.
In Example 30, a device 600, including a processor 604, configured to receive from a hardware security module 602 feature engineering data and coefficient data for a reference artificial neural network; and reconstruct the reference artificial neural network based on the feature engineering data, the coefficient data, and a predefined algorithm.
In Example 31, the device of Example 30, wherein the feature engineering data represent a feature that has been extracted from raw data for inputting into the reference artificial neural network, wherein the feature corresponds to an input to a node of the reference artificial neural network.
In Example 32, the device of any one of Examples 30 to 31, wherein the coefficient data represent a weight for each connection between nodes of the reference artificial neural network.
In Example 33, the device of any one of Examples 30 to 32, wherein the processor is further configured to reconstruct the reference artificial neural network by integrating the feature engineering data and the coefficient data according to the predefined algorithm.
In Example 34, the device of any one of Examples 31 to 33, wherein instructions for the predefined algorithm are stored on the second memory 608.
In Example 35, the device of any one of Examples 30 to 34, wherein the processor 604 is configured to generate a representation of a candidate artificial neural network, wherein the candidate artificial neural network corresponds to the reconstructed reference artificial neural network.
In Example 36, the device of Example 35, wherein the hash value is a first hash value, and wherein the representation of the candidate artificial neural network includes a second hash value of the candidate artificial neural network.
In Example 37, the device of Example 36, wherein the hash value is a first hash value; wherein the first hash value is a result of a hash function as applied to the reference artificial neural network; wherein generating the representation of the candidate artificial neural network includes the processor 604 generating the second hash value by applying the hash function to the candidate artificial neural network and signing the second hash value according to a private key.
In Example 38, the device of Example 37, wherein the first representation is the first hash value signed by a private key.
In Example 39, the device of Example 37, wherein the hash function is a hash function according to an Elliptic-Curve Cryptography algorithm, a Secure Hash Algorithm 2, a Secure Hash Algorithm 256, or an RSA curve algorithm.
In Example 40, the device of any one of Examples 38 or 39, further including: a communications interface 610 for communication between the hardware security module 602 and the processor 604; wherein the processor 604 is further configured to send the representation of the candidate artificial neural network to the hardware security module 602 via the communications interface 610 and to receive from the hardware security module 602 via the communications interface 610 a response representing a confirmation that the representation of the candidate artificial neural network corresponds to the first hash value or a confirmation that the first representation of the candidate artificial neural network does not correspond to the first hash value.
In Example 41, a method including: receiving in a processor, and from a hardware security module 602, different from the processor, feature engineering data and coefficient data for a reference artificial neural network; and reconstructing the reference artificial neural network based on the feature engineering data, the coefficient data, and a predefined algorithm.
In Example 42, the method of Example 41, wherein the feature engineering data represent a feature that has been extracted from raw data for inputting into the reference artificial neural network, wherein the feature corresponds to an input to a node of the reference artificial neural network.
In Example 43, the method of any one of Examples 41 to 42, wherein the coefficient data represent a weight for each connection between nodes of the reference artificial neural network.
In Example 44, the method of any one of Examples 41 to 43, further including the processor reconstructing the reference artificial neural network by integrating the feature engineering data and the coefficient data according to the predefined algorithm.
In Example 45, the method of any one of Examples 42 to 44, wherein instructions for the predefined algorithm are stored on the second memory 608.
In Example 46, the method of any one of Examples 41 to 45, further including generating in the processor a representation of the candidate artificial neural network of a candidate artificial neural network.
In Example 47, the method of Example 46, wherein the hash value is a first hash value, and wherein the representation of the candidate artificial neural network includes a second hash value of the candidate artificial neural network.
In Example 48, the method of Example 47, wherein the hash value is a first hash value; wherein the first hash value is a result of a hash function as applied to the reference artificial neural network; wherein generating the representation of the candidate artificial neural network includes the processor 604 generating the second hash value by applying the hash function to the candidate artificial neural network and signing the second hash value according to a private key.
In Example 49, the method of Example 48, wherein the first representation of the first hash value is signed with a private key.
In Example 50, the method of Example 49, wherein the hash function is a hash function according to an Elliptic-Curve Cryptography algorithm, a Secure Hash Algorithm 2, a Secure Hash Algorithm 256, or an RSA curve algorithm.
In Example 51, the method of any one of Examples 49 or 50, further including: sending, from the processor 604, the representation of the candidate artificial neural network to the hardware security module 602 via the communications interface 610 and receiving from the hardware security module 602 via the communications interface 610 a response representing a confirmation that the representation of the candidate artificial neural network corresponds to the first hash value or a confirmation that the first representation of the candidate artificial neural network does not correspond to the first hash value.
In Example 52, a non-transitory computer readable medium, including instructions which, if executed, cause one or more processors to perform the steps of any one of Examples 41 to 51.
In Example 53, a device 600, including a hardware security module 602 configured to send to a processor feature engineering data and coefficient data for a reference artificial neural network.
In Example 54, the device of Example 53, wherein the hardware security module 602 includes a first memory 606, configured to store the coefficient data and the feature engineering data.
In Example 55, the device of any one of Examples 53 or 54, wherein the feature engineering data represent a feature that has been extracted from raw data for inputting into the reference artificial neural network, wherein the feature corresponds to an input to a node of the reference artificial neural network.
In Example 56, the device of any one of Examples 53 to 55, wherein the coefficient data represent a weight for each connection between nodes of the reference artificial neural network.
In Example 57, the device of any one of Examples 53 to 56, wherein the hardware security module 602 includes a first memory 606, configured to store a hash value of the reference artificial neural network; wherein at least one of the hardware security module 602 or the processor 604 is configured to verify the candidate artificial neural network when a representation of the candidate artificial neural network corresponds to the hash value; and not to verify the candidate artificial neural network when the representation of the candidate artificial neural network does not correspond to the hash value.
In Example 58, the device of Example 57, wherein the hash value is a first hash value, and wherein the representation of the candidate artificial neural network includes a second hash value of the candidate artificial neural network.
In Example 59, the device of any one of Examples 56 to 58, wherein the hardware security module 602 verifying the candidate artificial neural network when the representation of the candidate artificial neural network corresponds to the hash value includes the hardware security module 602 recovering the second hash by decrypting the representation of the candidate artificial neural network using a public key and verifying the candidate artificial neural network when the first hash is identical to the second hash; and not verifying the candidate artificial neural network when the first hash is not identical to the second hash.
In Example 60, the device of any one of Examples 55 to 59, wherein the hardware security module 602 is configured to only permit the processor 604 access to the feature engineering data and the coefficient data after the hardware security module (602) authenticates the processor or a user of the processor.
In Example 61, a method including: sending to a processor 604 by a hardware security module 602 feature engineering data and coefficient data for a reference artificial neural network; and reconstructing the reference artificial neural network based on the feature engineering data, the coefficient data, and a predefined algorithm.
In Example 62, the method of Example 61, wherein the hardware security module 602 includes a first memory 606, configured to store the coefficient data and the feature engineering data.
In Example 63, the method of any one of Examples 61 or 62, wherein the feature engineering data represent a feature that has been extracted from raw data for inputting into the reference artificial neural network, wherein the feature corresponds to an input to a node of the reference artificial neural network.
In Example 64, the method of any one of Examples 61 to 63, wherein the coefficient data represent a weight for each connection between nodes of the reference artificial neural network.
In Example 65, the method of any one of Examples 61 to 64, further including storing a hash value of the reference artificial neural network in the hardware security module 602; verifying in the hardware security module 602 the candidate artificial neural network when a representation of the candidate artificial neural network corresponds to the hash value; and not verifying the candidate artificial neural network when the representation of the candidate artificial neural network does not correspond to the hash value.
In Example 66, the method of Example 65, wherein the hash value is a first hash value, and wherein the representation of the candidate artificial neural network includes a second hash value of the candidate artificial neural network.
In Example 67, the method of any one of Examples 62 to 66, further including the hardware security module 602 only permitting the processor 604 access to the feature engineering data and the coefficient data after the hardware security module (602) authenticates the processor or a user of the processor.
In Example 68, a non-transitory computer readable medium, including instructions which, if executed, cause one or more processors to perform the steps of any one of Examples 61 to 67.

While the above descriptions and connected figures may depict components as separate elements, skilled persons will appreciate the various possibilities to combine or integrate discrete elements into a single element. Such may include combining two or more circuits for form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method.

All acronyms defined in the above description additionally hold in all claims included herein.

## Claims

1. A device (600), comprising:
a hardware security module (602); and
a processor (604), different from the hardware security module (602);
wherein the processor (604) is configured to:
receive from the hardware security module (602) feature engineering data and coefficient data for a reference artificial neural network; and
reconstruct the reference artificial neural network based on the feature engineering data, the coefficient data, and a predefined algorithm.

2. The device of claim 1:
wherein the hardware security module (602) comprises a first memory (606), configured to store the coefficient data and the feature engineering data.

3. The device of claim 1 or 2, wherein the feature engineering data represent a feature that has been extracted from raw data for inputting into the reference artificial neural network, wherein the feature corresponds to an input to a node of the reference artificial neural network.

4. The device of any one of claims 1 to 3, wherein the coefficient data represent a weight for each connection between nodes of the reference artificial neural network.

5. The device of any one of claims 1 to 4,
wherein the hardware security module (602) comprises a first memory (606), configured to store a first representation of the reference artificial neural network;
wherein the processor (604) is configured to generate a second representation of a candidate artificial neural network, wherein the candidate artificial neural network corresponds to the reconstructed reference artificial neural network;
wherein at least one of the hardware security module (602) or the processor (604) is configured to verify the candidate artificial neural network when the second representation corresponds to first representation; and not to verify the candidate artificial neural network when the second representation does not correspond to the first representation.

6. The device of claim 5, wherein the first representation is a first hash value;
wherein the second representation of the candidate artificial neural network is a second hash value of the candidate artificial neural network;
wherein the first hash value is a result of a hash function as applied to the reference artificial neural network; and
wherein generating the second representation comprises the processor (604) generating the second hash value by applying the hash function to the candidate artificial neural network.

7. The device of claim 6, wherein the processor (604) or the hardware security module (602) is configured to check whether the second representation corresponds to the first representation using a public key corresponding to the private key.

8. The device of claim 6, wherein the first representation is the first hash value signed with a private key.

9. The device of any one of claims 5 to 8,
wherein the hardware security module (602) verifying the candidate artificial neural network when the second representation corresponds to the first representation comprises the hardware security module (602) recovering the second representation by decoding a signed version of the second representation using a public key and verifying the candidate artificial neural network when the first representation is identical to the decrypted second representation; and not verifying the candidate artificial neural network when the first representation is not identical to the decrypted second representation.

10. The device of any one of claims 1 to 9, wherein the hardware security module (602) is configured to only permit the processor (604) access to the feature engineering data and the coefficient data after the hardware security module (602) authenticates the processor or a user of the processor.

11. A method comprising:
receiving in a processor, and from a hardware security module (602), different from the processor, feature engineering data and coefficient data for a reference artificial neural network; and
reconstructing the reference artificial neural network based on the feature engineering data, the coefficient data, and a predefined algorithm.

12. The method of claim 11, wherein the feature engineering data represent a feature that has been extracted from raw data for inputting into the reference artificial neural network, wherein the feature corresponds to an input to a node of the reference artificial neural network, and wherein the coefficient data represent a weight for each connection between nodes of the reference artificial neural network.

13. The method of claim 11 or 12, further comprising the processor reconstructing the reference artificial neural network by integrating the feature engineering data and the coefficient data according to the predefined algorithm.

14. The method of any one of claims 11 to 13,
further comprising storing a hash value of the reference artificial neural network in the hardware security module (602);
generating in the processor a representation of the candidate artificial neural network of a candidate artificial neural network, wherein the candidate artificial neural network corresponds to the reconstructed reference artificial neural network;
verifying in the hardware security module (602) or the processor (604) the candidate artificial neural network when the representation of the candidate artificial neural network corresponds to the hash value; and not verifying the candidate artificial neural network when the representation of the candidate artificial neural network does not correspond to the hash value.

15. A non-transitory computer readable medium, comprising instructions which, if executed, cause one or more processors to perform the steps of any one of claims 11 to 14.

## Amended claims

### Amended claims in accordance with Rule 137(2) EPC.

1. A device (600), comprising:
a hardware security module (602); and
a processor (604), different from the hardware security module (602);
wherein the processor (604) is configured to:
receive from the hardware security module (602) feature engineering data and coefficient data for a reference artificial neural network; and
reconstruct the reference artificial neural network based on the feature engineering data, the coefficient data, and a predefined algorithm,
wherein the hardware security module (602) comprises a first memory (606), configured to store a first representation of the reference artificial neural network;
wherein the processor (604) is configured to generate a second representation of a candidate artificial neural network, wherein the candidate artificial neural network corresponds to the reconstructed reference artificial neural network;
wherein at least one of the hardware security module (602) or the processor (604) is configured to verify the candidate artificial neural network when the second representation corresponds to first representation; and not to verify the candidate artificial neural network when the second representation does not correspond to the first representation.

2. The device of claim 1:
wherein the hardware security module (602) comprises a first memory (606), configured to store the coefficient data and the feature engineering data.

3. The device of claim 1 or 2, wherein the feature engineering data represent a feature that has been extracted from raw data for inputting into the reference artificial neural network, wherein the feature corresponds to an input to a node of the reference artificial neural network.

4. The device of any one of claims 1 to 3, wherein the coefficient data represent a weight for each connection between nodes of the reference artificial neural network.

5. The device of any one of claims 1 to 4, wherein the first representation is a first hash value;
wherein the second representation of the candidate artificial neural network is a second hash value of the candidate artificial neural network;
wherein the first hash value is a result of a hash function as applied to the reference artificial neural network; and
wherein generating the second representation comprises the processor (604) generating the second hash value by applying the hash function to the candidate artificial neural network.

6. The device of claim 5, wherein the processor (604) or the hardware security module (602) is configured to check whether the second representation corresponds to the first representation using a public key corresponding to the private key.

7. The device of claim 5, wherein the first representation is the first hash value signed with a private key.

8. The device of any one of claims 1 to 7,
wherein the hardware security module (602) verifying the candidate artificial neural network when the second representation corresponds to the first representation comprises the hardware security module (602) recovering the second representation by decoding a signed version of the second representation using a public key and verifying the candidate artificial neural network when the first representation is identical to the decrypted second representation; and not verifying the candidate artificial neural network when the first representation is not identical to the decrypted second representation.

9. The device of any one of claims 1 to8, wherein the hardware security module (602) is configured to only permit the processor (604) access to the feature engineering data and the coefficient data after the hardware security module (602) authenticates the processor or a user of the processor.

10. A method comprising:
receiving in a processor, and from a hardware security module (602), different from the processor, feature engineering data and coefficient data for a reference artificial neural network;
reconstructing the reference artificial neural network based on the feature engineering data, the coefficient data, and a predefined algorithm;
storing a first representation of the reference artificial neural network;
generating in the processor a second representation of a candidate artificial neural network, wherein the candidate artificial neural network corresponds to the reconstructed reference artificial neural network;
verifying in the hardware security module (602) or the processor (604) the candidate artificial neural network when the second representation corresponds to the first representation; and not to verifying the candidate artificial neural network when the second representation does not correspond to the first representation.

11. The method of claim10, wherein the feature engineering data represent a feature that has been extracted from raw data for inputting into the reference artificial neural network, wherein the feature corresponds to an input to a node of the reference artificial neural network, and wherein the coefficient data represent a weight for each connection between nodes of the reference artificial neural network.

12. The method of claim 10 or11, further comprising the processor reconstructing the reference artificial neural network by integrating the feature engineering data and the coefficient data according to the predefined algorithm.

13. The method of any one of claims 10 to 12,
wherein the first representation is a hash value of the reference artificial neural network.

14. A non-transitory computer readable medium, comprising instructions which, if executed, cause one or more processors to perform the steps of any one of claims 10 to 13.
